# EUROPEAN PATENT APPLICATION

(11) **EP 4 848 462 A1**
(43) Date of publication of application: **02.12.2026**
(21) Application number: 25745148.4
(22) Date of filing: 22.01.2025
(51) Int. Cl.: H01M 50/533, H01M 10/04, H01M 10/0587, H01M 50/107, H01M 50/152

(54) **CYLINDRICAL BATTERY**

(30) Priority: 25.01.2024 JP 2024009341
(71) Applicant: Panasonic Intellectual Property Management Co., Ltd., Kadoma-shi, Osaka 571-0057 (JP)
(72) Inventor: OKIMOTO, Ryota, Kadoma-shi, Osaka 571-0057 (JP); TAKANO, Akira, Kadoma-shi, Osaka 571-0057 (JP)
(74) Representative: Eisenführ Speiser
(86) International application number: PCT/JP2025/001857
(87) International publication number: WO 2025/159107

(57) **Abstract**

A cylindrical battery according to the present disclosure comprises: a wound electrode body (14) in which a positive electrode plate (11) and a negative electrode plate (12) are wound with a separator (13) therebetween, the wound electrode body (14) having a cylindrical hollow section (23) in the winding center; a cylindrical outer packaging can (16) that accommodates the electrode body (14); and a sealing assembly (17) that blocks the opening of the outer packaging can (16). The cylindrical battery includes a lead (20) that is connected to the electrode plates forming the electrode body (14), and comprises current collection members (30) that are connected to the lead (20) and the sealing assembly (17) and are disposed between the electrode body (14) and the sealing assembly (17). The current collection members (30) are characterized in that a current collection member (30) on the electrode body (14) side and a current collection member (30) on the sealing assembly (17) side are disposed so as to cover the hollow section (23).

## Description

### TECHNICAL FIELD

The present disclosure generally relates to a cylindrical battery, and more particularly to an internal structure of the cylindrical battery.

### BACKGROUND ART

A cylindrical battery generally comprises a wound electrode assembly of a positive electrode and a negative electrode that are spirally wound with a separator interposed therebetween, a bottomed cylindrical housing can that houses the electrode assembly, and a sealing assembly with which an opening portion of the housing can is capped, and has a structure in which a lead extending from the electrode assembly is connected to the sealing assembly (for example, see PATENT LITERATURE 1). In addition, a cylindrical hollow portion is formed in a center portion of the electrode assembly.

### CITATION LIST

### PATENT LITERATURE

PATENT LITERATURE 1: Japanese Unexamined Patent Application Publication No. 2005-285514

### SUMMARY

During abnormal heat generation in the electrode assembly, the flame temperature and the flame density become the highest in the hollow portion, and therefore a problem arises in that the sealing assembly located at a top plate thereof is melted and punctured due to direct flame exposure, and the flame is expelled through the hole. However, such a problem cannot be solved even with the cylindrical battery disclosed in PATENT LITERATURE 1.

A cylindrical battery according to the present disclosure comprises a wound electrode assembly of a positive electrode plate and a negative electrode plate that are wound with a separator interposed between the positive electrode plate and the negative electrode plate, the wound electrode assembly having a cylindrical hollow portion at a winding center, a cylindrical housing can that houses the electrode assembly, and a sealing assembly with which an opening portion of the housing can is capped. The cylindrical battery includes a lead connected to an electrode plate included in the electrode assembly, and comprises a current collecting member that is connected to the lead and the sealing assembly and is disposed between the electrode assembly and the sealing assembly. The current collecting member is disposed so that the current collecting member on a side of the electrode assembly and the current collecting member on a side of the sealing assembly cover the hollow portion.

According to the cylindrical battery according to the present disclosure, it is possible to reduce a direct attack of flame on the sealing assembly, the flame being emitted from the hollow portion of the electrode assembly during abnormal heat generation of the battery.

### BRIEF DESCRIPTION OF DRAWING

FIG. 1 is a sectional view of a cylindrical battery according to the present embodiment.
FIG. 2 is a perspective view of an upper portion of the cylindrical battery according to the present embodiment, and illustrates a state before a sealing assembly is crimp-fixed.

### DESCRIPTION OF EMBODIMENTS

Hereinafter, an example of embodiments of a cylindrical battery according to the present disclosure will be described in detail with reference to the drawings. Configurations formed by selectively combining the constituent elements of a plurality of embodiments and modified examples described below are included within the scope of the present disclosure.

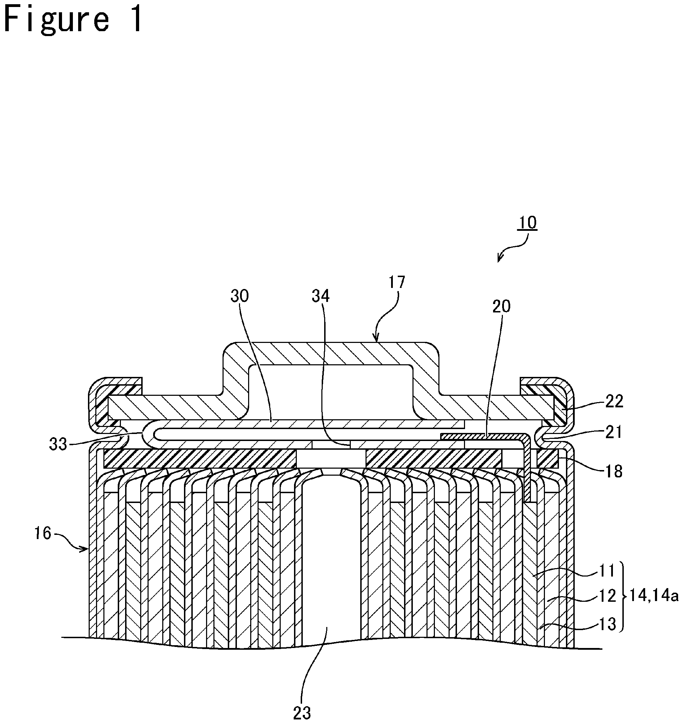

FIG. 1 is a sectional view of a cylindrical battery 10 of an example of an embodiment. As illustrated in FIG. 1, the cylindrical battery 10 comprises a wound electrode assembly 14, an electrolyte, a bottomed cylindrical housing can 16 that houses the electrode assembly 14 and the electrolyte, and a sealing assembly 17 with which an opening portion of the housing can 16 is capped. The electrode assembly 14 has a positive electrode 11, a negative electrode 12, and a separator 13, and has a wound structure in which the positive electrode 11 and the negative electrode 12 are spirally wound with the separator 13 interposed therebetween. Hereinafter, for convenience of description, the sealing assembly 17 side of the battery will be described as "the upper side", and the bottom side of the housing can 16 will be described as "the lower side".

Each of the positive electrode 11, the negative electrode 12, and the separator 13 constituting the electrode assembly 14 is a band-shaped elongate body, and the positive electrode 11, the negative electrode 12, and the separator 13 are spirally wound so as to be alternately stacked in a radial direction of the electrode assembly 14. The negative electrode 12 is formed to be slightly larger than the positive electrode 11 in order to prevent precipitation of lithium. That is, the negative electrode 12 is formed to be longer in the longitudinal direction and the width direction than the positive electrode 11. The two separators 13 are each formed to be slightly larger than at least the positive electrode 11, and are disposed so as to interpose, for example, the positive electrode 11 therebetween. The electrode assembly 14 has a positive electrode lead 20 connected to the positive electrode 11 by welding or the like, and a negative electrode lead (not shown) connected to the negative electrode 12 by welding or the like.

Although described in detail below, the cylindrical battery 10 includes a plurality of positive electrode leads 20. The cylindrical battery 10 further comprises a current collecting member 30 that is disposed between the electrode assembly 14 and the sealing assembly 17. The current collecting member 30 is a conductive member to which the positive electrode leads 20 and the sealing assembly 17 are connected such that the positive electrode leads 20 and the sealing assembly 17 are electrically connected. That is, in the present embodiment, the current collecting member 30 functions as a positive electrode current collecting member. Alternatively, a negative electrode lead is connected to the current collecting member 30, so that the current collecting member 30 can also function as a negative electrode current collecting member.

The positive electrode 11 has a positive electrode core, and a positive electrode mixture layer disposed on the positive electrode core. For the positive electrode core, a foil of metal such as aluminum, an aluminum alloy, stainless steel, or titanium, which is stable within a potential range of the positive electrode 11, a film in which such a metal is disposed on a surface layer thereof, or the like can be used. The positive electrode mixture layer includes a positive electrode active material, a conductive agent, and a binder, and is preferably provided on each surface of the positive electrode core except for portions to which the positive electrode leads 20 are connected. For the positive electrode active material, a lithium-transition metal composite oxide containing a transition metal element such as Ni, Co, and Mn is used.

The negative electrode 12 has a negative electrode core, and a negative electrode mixture layer disposed on the negative electrode core. For the negative electrode core, a foil of metal such as copper, a copper alloy, stainless steel, nickel, or a nickel alloy, which is stable within a potential range of the negative electrode 12, a film in which such a metal is disposed on a surface layer thereof, or the like can be used. The negative electrode mixture layer includes a negative electrode active material, and a binder, and is preferably provided on each surface of the negative electrode core except for a portion to which a negative electrode lead is connected. For the negative electrode active material, a carbon material that reversibly occludes and releases lithium ions is generally used. For the negative electrode active material, an element such as Si or Sn that forms an alloy with Li, a material containing such an element, or the like may be used.

For the separator 13, a porous sheet having an ion permeation property and an insulation property is used. Specific examples of the porous sheet include a fine porous thin film, a woven fabric, and a nonwoven fabric. As a material of the separator 13, polyolefin such as polyethylene or polypropylene, or a cellulose is preferable. The separator 13 may have a single-layer structure or a multi-layer structure. The separator 13 may have a multi-layer structure including a thermoplastic resin layer such as polyolefin and a cellulose fiber layer, a two-layer structure of polyethylene (PE) and polypropylene (PP), or a three-layer structure of PE, PP, and PE.

The electrolyte may be an aqueous electrolyte, but in the present embodiment, a non-aqueous electrolyte is used. The non-aqueous electrolyte has lithium ion conductivity. The non-aqueous electrolyte may be a liquid electrolyte (electrolyte solution), or may be a solid-state electrolyte.

The liquid electrolyte (electrolyte solution) includes a non-aqueous solvent, and an electrolyte salt dissolved in the non-aqueous solvent. For the non-aqueous solvent, for example, esters, ethers, nitriles, amides, or mixed solvents of two or more of these are used. Examples of the non-aqueous solvent include ethylene carbonate (EC), ethylmethyl carbonate (EMC), dimethyl carbonate (DMC), diethyl carbonate (DEC), and mixed solvents of these. The non-aqueous solvent may contain a halogen-substituted product (for example, fluoroethylene carbonate) obtained by substituting at least a part of hydrogen in these solvents with a halogen atom such as fluorine. For the electrolyte salt, for example, a lithium salt such as LiPF₆ is used.

As a solid-state electrolyte, for example, a solid-state or gel-state polymer electrolyte, an inorganic solid-state electrolyte, or the like can be used. As the inorganic solid-state electrolyte, a material known in an all-solid-state lithium ion secondary battery and the like (for example, an oxide-based solid-state electrolyte, a sulfide-based solid-state electrolyte, and a halide-based solid-state electrolyte) can be used. The polymer electrolyte includes, for example, a lithium salt and a matrix polymer, or a non-aqueous solvent, a lithium salt, and a matrix polymer. As the matrix polymer, for example, a polymer material which absorbs and gels the non-aqueous solvent is used. Examples of the polymer material include fluororesin, acrylic resin, and polyether resin.

Insulating plate 18 is disposed on the upper surface of the electrode assembly 14. In the example illustrated in FIG. 1, the positive electrode lead 20 extends toward the sealing assembly 17 side through a through hole in the insulating plate 18. The current collecting member 30 to which the plurality of positive electrode leads 20 are connected is connected to a lower surface of the sealing assembly 17 by welding or the like, so that the sealing assembly 17 electrically connected serves as a positive electrode terminal. The negative electrode lead is, for example, connected to a bottom inner surface of the housing can 16 by welding or the like, so that the housing can 16 serves as a negative electrode terminal. The housing can 16 and the sealing assembly 17 are connected to an external circuit such as other batteries configuring a battery module or a charger.

The housing can 16 is a bottomed cylindrical metallic housing can in which one side in the axial direction opens, and the opening portion of the housing can 16 is sealed with the sealing assembly 17. A gasket 22 is provided between the housing can 16 and the sealing assembly 17 to achieve sealability inside the battery. The housing can 16 has a grooved portion 21 formed by causing a part of a side surface portion to project inward and configured to support the sealing assembly 17. The grooved portion 21 is preferably formed annularly along the circumferential direction of the housing can 16, and supports the sealing assembly 17 on its upper surface. The sealing assembly 17 is fixed to an upper portion of the housing can 16 by the grooved portion 21 and an opening end portion of the housing can 16 which is crimped to the sealing assembly 17.

The opening portion of the housing can 16 is capped with the sealing assembly 17. In the example illustrated in FIG. 1, the sealing assembly 17 is constituted of a cap. The sealing assembly 17 may have a laminate structure of the internal terminal plate, a lower vent member, an insulating member, an upper vent member, and the cap in this order from the electrode assembly 14 side. Each member constituting the sealing assembly 17 may have, for example, a disk shape or a ring shape, and each member except for the insulating member may be electrically connected to each other. In addition, the lower vent member and the upper vent member may be connected to each other at respective central portions, and the insulating member may be interposed between respective peripheral edge portions.

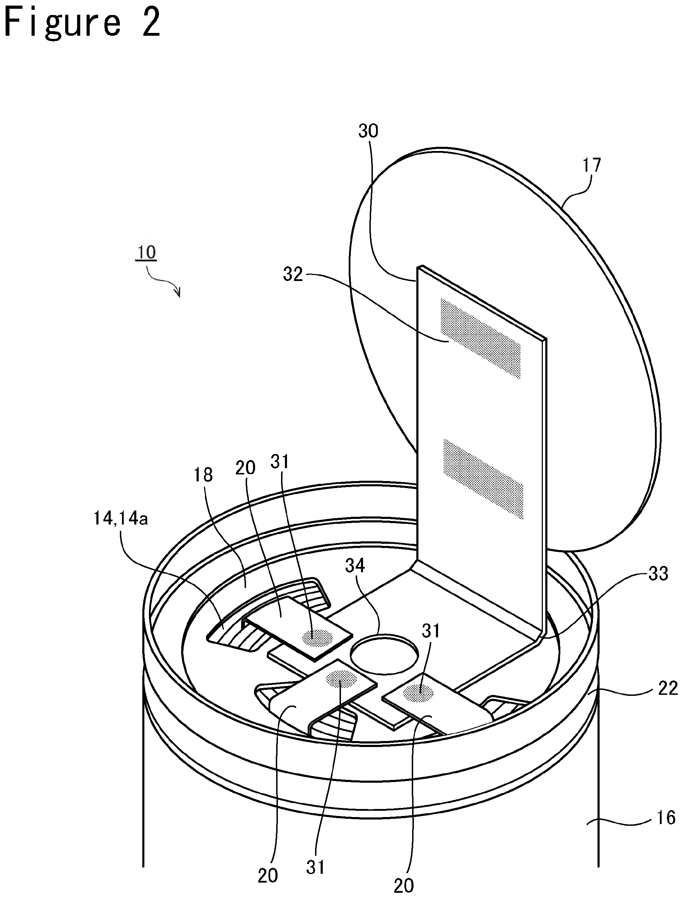

Hereinafter, the positive electrode leads 20 and the current collecting member 30 will be described in detail further with reference to FIG. 2. FIG. 2 is a perspective view of an upper portion of the cylindrical battery 10, and illustrates a state before the opening portion of the housing can 16 is sealed with the sealing assembly 17.

As illustrated in FIGS. 1 and 2, the electrode assembly 14 includes a plurality of positive electrode leads 20 connected to the positive electrode 11. The plurality of positive electrode leads 20 extend in a direction of the sealing assembly 17 from an upper end of an electrode group 14a constituting the electrode assembly 14, and are connected to the current collecting member 30 disposed on the insulating plate 18. The electrode group 14a means a wound body including the positive electrode 11, the negative electrode 12, and the separator 13, and a hollow portion 23 is formed in a winding core of the electrode group 14a.

The hollow portion 23 is a space extending in the axial direction of the electrode group 14a. The current collecting member 30 is a conductive member connected to the sealing assembly 17, so that the positive electrode leads 20 are electrically connected to the sealing assembly 17 via the current collecting member 30. In the present embodiment, the housing can 16 in which the grooved portion 21 is formed functions as the negative electrode terminal, so that the current collecting member 30 is disposed so as not to contact the grooved portion 21.

Each positive electrode lead 20 is a strip-shaped conductive member, and is made of, for example, a metal containing aluminum as a main component. The constituent material of the positive electrode leads 20 is preferably an aluminum alloy. The aluminum alloy is an alloy formed by adding one or more of other metal elements such as copper, manganese, silicon, magnesium, zinc, and nickel to aluminum, so that the electrical resistance, hardness, and the like of the material can be changed by adjusting the kind and amount of the added elements.

The width and thickness of the positive electrode leads 20 change depending on the size, capacity, and the like of the battery, but the width of the positive electrode leads 20 is, for example, greater than or equal to 2 mm and less than or equal to 15 mm, or greater than or equal to 3 mm and less than or equal to 10 mm. The thickness of the positive electrode leads 20 is, for example, greater than or equal to 0.03 mm and less than or equal to 0.15 mm, or greater than or equal to 0.05 mm and less than or equal to 0.10 mm. The plurality of positive electrode leads 20 may have different widths and thicknesses, but in the example illustrated in FIG. 2, all of the positive electrode leads 20 have substantially the same width and thickness.

The positive electrode leads 20 are welded to a core of the positive electrode 11. In the positive electrode 11, a plurality of core exposed portions where a surface of the positive electrode core is exposed without providing the positive electrode mixture layer on the positive electrode core are provided so as to be spaced away from each other in a length direction of the positive electrode 11. The positive electrode leads 20 are connected to the exposed portions in a one-to-one manner by welding or the like. The positive electrode leads 20 are generally joined to only one surface of the positive electrode core, but the core exposed portions are provided on both surfaces of the positive electrode 11. The core exposed portions are formed, for example, in an overlapping manner in the thickness direction of the positive electrode 11 so as to have substantially the same size. The welding position of the positive electrode lead 20 in each exposed portion is any position that allows the positive electrode lead 20 to be disposed within a range of the core exposed portion so as not to overlap the positive electrode mixture layer.

In the mode illustrated in FIG. 2, three positive electrode leads 20 are provided, so that the core exposed portions are formed at three positions spaced apart from each other in the length direction of the positive electrode 11. The intervals between the exposed portions may be uniform or may vary, but the layout of the positive electrode leads 20 is set as appropriate according to the battery performance of the cylindrical battery 10 such as the capacity and the output characteristic. Therefore, the intervals between the core exposed portions are determined according to the layout and the like. The number of the positive electrode leads 20 may be one, but, in the large-sized battery, it may be preferably plural, and may be, for example, greater than or equal to two and less than or equal to 15.

The current collecting member 30 is a conductive member to which the plurality of positive electrode leads 20 are welded and which is welded to the sealing assembly 17, is disposed between the electrode assembly 14 and the sealing assembly 17, and functions as a positive electrode current collecting member. The constituent material of the current collecting member 30 is not limited to a particular material, but, similarly to the positive electrode leads 20, the current collecting member 30 is made of, for example, a metal containing aluminum as a main component. A preferable example of the constituent material of the current collecting member 30 is an aluminum alloy. In the current collecting member 30, a welding portion 32 with the sealing assembly 17 and welding portions 31 with the positive electrode lead 20 are formed.

The current collecting member 30 is disposed above the electrode assembly 14 via the insulating plate 18. The current collecting member 30 is disposed on the insulating plate 18, but may be fixed to the insulating plate 18. The insulator interposed between the electrode assembly 14 and the current collecting member 30 is not limited to the insulating plate 18, and may be, for example, an insulator included in the electrode assembly 14 or the current collecting member 30. Examples of the insulator other than the insulating plate 18 include the separator 13 included in the electrode assembly 14, and an insulating layer provided on a surface of the current collecting member 30 that faces the electrode assembly 14.

As illustrated in FIG. 1, the current collecting member 30 is disposed so that the current collecting member 30 on the electrode assembly 14 side and the current collecting member 30 on the sealing assembly 17 side cover the hollow portion 23 of the electrode assembly 14. The current collecting member 30 has width and length larger than the diameter of the hollow portion 23, and is disposed to cover an entirety of the hollow portion 23 and to cover the radially inner portion of the electrode assembly 14, for example.

The current collecting member 30 may comprise a through hole 34 in a portion covering the hollow portion 23. The hollow portion 23 of the electrode assembly 14 serves as a gas discharge pathway when an abnormality occurs in the battery and gas is generated. When the current collecting member 30 comprises the through hole 34, the flame generated in the hollow portion 23 can be dispersed between the current collecting member 30 on the sealing assembly 17 side and the current collecting member 30 on the electrode assembly 14 side. This makes it possible to reduce a density of flame expelled from the hollow portion 23 and to reduce an outburst of the battery.

The current collecting member 30 is disposed such that at least a part of the through hole 34 overlaps the hollow portion 23 in the axial direction of the electrode assembly 14. In the example illustrated in FIG. 2, the positive electrode leads 20 are welded to the periphery of the through hole 34 in the current collecting member 30 so as not to cover the through hole 34.

In the current collecting member 30, a plurality of welding portions 31 are formed to surround the through hole 34. The positive electrode leads 20 are welded to a first surface (upper surface) of the current collecting member 30 facing a direction of the sealing assembly 17, are welded to a second surface (lower surface) of the current collecting member 30 facing a direction of the electrode assembly 14, or are welded to both of the first and second surfaces. In the example illustrated in FIG. 2, all of the positive electrode leads 20 are welded to the upper surface of the current collecting member 30. In this case, good welding portions 31 can be easily formed and the reliability of the welding portions 31 can also be improved. The welding portions 31 may also be formed on the hollow portion 23 of the electrode assembly 14. In this case, the welding portions 31 can be formed by inserting a jig used for welding into the hollow portion 23.

The through hole 34 is formed through the current collecting member 30 in the axial direction of the electrode assembly 14, and in the example illustrated in FIG. 2, has a perfect circular shape in a plan view. In addition, in the insulating plate 18, a through hole is formed at a position overlapping the through hole 34. In a plan view of the electrode assembly 14 and the current collecting member 30, the through hole 34 is larger than the hollow portion 23, and thus, the current collecting member 30 may be disposed above the electrode assembly 14 so that an entirety of the hollow portion 23 is exposed through the through hole 34. The current collecting member 30 is disposed, for example, so that a center of the through hole 34 overlaps a center axis of the electrode assembly 14.

As described above, in the illustrated embodiment, the current collecting member 30 on the electrode assembly 14 side comprises the through hole 34 at a position where the current collecting member 30 covers the hollow portion 23 of the electrode assembly 14, but in the present disclosure, the current collecting member 30 can have a structure in which the through hole 34 is not formed. That is, the current collecting members 30 on the electrode assembly 14 side and on the sealing assembly 17 side in the current collecting member 30 make it possible to doubly reduce the flame generated in the hollow portion 23 of the electrode assembly 14.

The current collecting member 30 has a folded portion 33 near a middle portion between the current collecting member 30 on the electrode assembly 14 side and the current collecting member 30 on the sealing assembly 17 side. The folded portion 33 is formed by bending a metal plate constituting the current collecting member 30. In addition, the folded portion 33 is formed in parallel to the width direction of the current collecting member 30. On the folded portion 33, a half-cut line, a cutout, or the like may be formed. The folded portion 33 is formed at at least one place, but a plurality of folded portions 33 may be formed in the length direction of the current collecting member 30.

The current collecting member 30 is preferably wider and thicker than the positive electrode lead 20. The current collecting member 30 is, for example, a metal plate having a substantially constant width and thickness over the entire length. The dimensions of the current collecting member 30 can be changed as appropriate according to the size or the like of the cylindrical battery 10, but, for example, the width of the current collecting member 30 is greater than or equal to 10 mm and less than or equal to 30 mm, or greater than or equal to 15 mm and less than or equal to 25 mm. The thickness of the current collecting member 30 is, for example, greater than or equal to 0.1 mm and less than or equal to 1.0 mm, or greater than or equal to 0.2 mm and less than or equal to 0.5 mm.

In the current collecting member 30, the width is larger than the thickness. A ratio of width to thickness of the current collecting member 30 is preferably greater than or equal to 30 times and less than or equal to 100 times, more preferably greater than or equal to 40 times and less than or equal to 90 times, and particularly preferably greater than or equal to 50 times and less than or equal to 80 times. When at least one of the thickness and the width of the current collecting member 30 is not constant, it is preferable that a ratio of the average width to the average thickness of the current collecting member 30 or a ratio of maximum width to maximum thickness falls within the range.

The widthwise cross-sectional area of the current collecting member 30 is larger than the widthwise cross-sectional area of the positive electrode lead 20, and is preferably greater than or equal to 5 times and less than or equal to 100 times the widthwise cross-sectional area of the positive electrode lead 20. It is more preferably greater than or equal to 10 times and less than or equal to 50 times, and particularly preferably greater than or equal to 15 times and less than or equal to 30 times. In this case, it is possible to reduce contact between the housing can 16 and the current collecting member 30. When the widthwise cross-sectional area of at least one of the positive electrode lead 20 and the current collecting member 30 is not constant, it is preferable that a ratio between the average widthwise cross-sectional areas of the members or a ratio between maximum values of the members falls within the range. The current collecting member 30 is preferably formed to be wider and thicker than the positive electrode lead 20 to increase the widthwise cross-sectional area.

The thickness of the current collecting member 30 is, for example, greater than or equal to 1.5 times and less than or equal to 15 times the thickness of the positive electrode lead 20, and preferably greater than or equal to 2 times and less than or equal to 10 times. When the thickness of at least one of the positive electrode lead 20 and the current collecting member 30 is not constant, it is preferable that a ratio between the average thicknesses of the members or a ratio between maximum values of the members falls within the range (the same also applies to the width). The width of the current collecting member 30 is, for example, greater than or equal to 1.5 times and less than or equal to 10 times the width of the positive electrode lead 20, and preferably greater than or equal to 2 times and less than or equal to 6 times.

The maximum width of the current collecting member 30 is preferably greater than or equal to 30% and less than or equal to 90% of the minimum inner diameter of the housing can 16, more preferably greater than or equal to 35% and less than or equal to 80%, and particularly preferably greater than or equal to 40% and less than or equal to 70%. In the present embodiment, the inner diameter of the housing can 16 is minimized at a portion where the grooved portion 21 is formed. When a ratio of the maximum width of the current collecting member 30 to the minimum inner diameter of the housing can 16 is within the range, it is possible to reduce contact between the housing can 16 and the current collecting member 30, and it becomes easy to weld the positive electrode leads 20.

In the current collecting member 30, a portion (hereinafter, referred to as a "first region") in which the welding portions 31 with the positive electrode leads 20 are formed is disposed to be along the radial direction of the electrode assembly 14 on the insulating plate 18. A portion (hereinafter, referred to as a "second region") in which the welding portion 32 with the sealing assembly 17 is formed is disposed to be along the lower surface of the sealing assembly 17. At least one welding portion 32 is formed in the second region. In the present embodiment, the folded portion 33 becomes a boundary between the first regions and the second region. The folded portion 33 is disposed at a radially outer side of the housing can 16 than one end of the current collecting member 30 in the length direction that exists in the first region, and is in close proximity to the grooved portion 21. In the present embodiment, the housing can 16 in which the grooved portion 21 is formed functions as the negative electrode terminal, so that the current collecting member 30 is disposed so as not to contact the grooved portion 21.

The width of the current collecting member 30 may change along the length direction. The width of the current collecting member 30 may be changed to prevent a contact with the housing can 16 while increasing the width of the current collecting member 30, so that the width of the portion where the folded portion 33 is formed is smaller than that of one end portion in the length direction. That is, the width of the current collecting member 30 may be smaller at the portion where the folded portion 33 is formed than at the one end portion in the length direction on the electrode assembly 14 side.

The width of the first region of the current collecting member 30 may be gradually reduced from the one end portion in the length direction toward the folded portion 33, and may be reduced step by step at at least one place. The width of the current collecting member 30 at the folded portion 33 is, for example, less than or equal to 90% of the width at the one end portion in the length direction, and may be greater than or equal to 30% and less than or equal to 80%, or greater than or equal to 50% and less than or equal to 70%. The width of the second region of the current collecting member 30 may be substantially the same as the width of the current collecting member 30 at the folded portion 33 over the entire length, or may increase from the folded portion 33.

The current collecting member 30 is, for example, bent in an L shape at the folded portion 33, and has an L shape in a state in which an external force does not act thereon. When the sealing assembly 17 is crimp-fixed to an opening edge portion of the housing can 16, the current collecting member 30 is bent at the folded portion 33 so that the first region faces the second region, and is disposed between the electrode assembly 14 and the sealing assembly 17 in a state of being compressed in the axial direction of the electrode assembly 14. The first region and the second region of the current collecting member 30 may be disposed, for example, substantially in parallel to each other to face each other at a slight interval, and may hold the positive electrode leads 20 welded to the upper surface of the first region therebetween.

As described above, according to the cylindrical battery comprising the above-described configuration, the current collecting member 30 on the electrode assembly 14 side and the current collecting member 30 on the sealing assembly 17 side are disposed to cover the hollow portion 23 of the electrode assembly 14, so that two current collecting members 30 facing each other are disposed above the hollow portion 23. This makes it possible to reduce a direct attack of flame on the sealing assembly 17, the flame being generated in the hollow portion 23. This makes it possible to prevent a hole from being formed in the sealing assembly 17 and to prevent the flame from being expelled from the sealing assembly 17.

Note that the embodiment described above can be changed in design as appropriate within a range that does not impair the object of the present disclosure, and may include modes obtained by selectively combining constituent elements of the embodiment described above. For example, in the mode illustrated in FIG. 2, the number of the positive electrode leads 20 may be six. In addition, a plurality of current collecting members 30 can be arranged between the electrode assembly 14 and the sealing assembly 17.

### REFERENCE SIGNS LIST

10 Cylindrical battery, 11 Positive electrode, 12 Negative electrode, 13 Separator, 14 Electrode assembly, 14a Electrode group, 16 Housing can, 17 Sealing assembly, 18 Insulating plate, 20 Positive electrode lead, 21 Grooved portion, 22 Gasket, 23 Hollow portion, 30 Current collecting member, 31, 32 Welding portion, 33 Folded portion, 34 Through hole

## Claims

1. A cylindrical battery, comprising:
a wound electrode assembly of a positive electrode plate and a negative electrode plate that are wound with a separator interposed between the positive electrode plate and the negative electrode plate, the wound electrode assembly having a cylindrical hollow portion at a winding center;
a cylindrical housing can that houses the electrode assembly; and
a sealing assembly with which an opening portion of the housing can is capped,
the cylindrical battery including a lead connected to an electrode plate included in the electrode assembly,
the cylindrical battery further comprising a current collecting member that is connected to the lead and the sealing assembly and is disposed between the electrode assembly and the sealing assembly, wherein
the current collecting member is disposed so that the current collecting member on a side of the electrode assembly and the current collecting member on a side of the sealing assembly cover the hollow portion.

2. The cylindrical battery according to claim 1, wherein
the current collecting member comprises a folded portion at a middle portion between the current collecting member on the side of the electrode assembly and the current collecting member on the side of the sealing assembly,
the current collecting member on the side of the electrode assembly is connected to the lead, and
the current collecting member on the side of the sealing assembly is connected to the sealing assembly.

3. The cylindrical battery according to claim 1 or 2, wherein
the current collecting member on the side of the electrode assembly comprises a through hole at a position where the current collecting member covers the hollow portion.
